(19) Europäisches Patentamt
European Patent Office
Office européen des brevets

(11) **EP 4 280 120 A1**

(12) **EUROPEAN PATENT APPLICATION**

(43) Date of publication:
**22.11.2023 Bulletin 2023/47**

(21) Application number: **22173729.9**

(22) Date of filing: **17.05.2022**

(51) International Patent Classification (IPC):
**G06N 5/00** *(2023.01)*    **G06N 5/04** *(2023.01)*

(52) Cooperative Patent Classification (CPC):
**G06N 5/041; G06N 5/01**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Université Toulouse III-Paul Sabatier**
  **31062 Toulouse Cedex 9 (FR)**
• **Centre National de la Recherche Scientifique**
  **75016 Paris 16 (FR)**
• **Institut National Polytechnique de Toulouse**
  **31029 Toulouse (FR)**
• **Monash University**
  **Clayton, Victoria 3800 (AU)**

(72) Inventors:
• **MARQUES-SILVA, Joao**
  **31062 TOULOUSE (FR)**
• **IZZA, Yacine**
  **31062 TOULOUSE (FR)**
• **IGNATIEV, Alexey**
  **CLAYTON, 3800 (AU)**

(74) Representative: **Vidon Brevets & Stratégie**
  **16B, rue de Jouanet**
  **BP 90333**
  **35703 Rennes Cedex 7 (FR)**

(54) **METHOD FOR PROCESSING DECISION DATA, DEVICE AND COMPUTER PROGRAM CORRESPONDING**

(57)    The invention relates to devices and methods for processing decision data, the decision data comprising a decision tree (T) and an input path (P), each node (r) of the decision tree being associated with a respective feature (i) of a feature set (F). According to the disclosure, the method comprises at least one iteration of an inheritance processing, as a function of a current universal set (U), representing some features which could be irrelevant to explain the input path, the set (U) being included in the feature set (F) and as a function of a current node (r) and a child node (s) linked together by an edge ((r,s)), the inheritance processing comprising:
- determining that the edge ((r,s)) verifies a first criterion relative to a consistency of the edge ((r,s)) with a corresponding edge ((r',s')) of the input path (P) relative to the same feature (i) as those of the current node (r), and then performing a first sub-inheritance processing as a function of the child node (s); and/or
- determining that the edge ((r,s)) verifies a second criterion, and then performing a second sub-inheritance processing as a function of the child node (s) and the current universal set (U),
such that the first sub-inheritance processing and the second sub-inheritance processing allows including features in the set (U) for explaining the input path (P).

Figure 3

EP 4 280 120 A1

**Description**

**1. Field of the invention**

The invention relates to the field of processing decision data, and more precisely to the determination of explanations of machine learning (ML) models.

Explanations essentially represent an answer to a "Why?" question, *i.e.* why is a prediction output by a ML model the one obtained?

**2. Prior art**

Such explanations of ML models aim at succinctness by being subset-minimal (or irreducible). These explanations are commonly referred to as PI-explanations or abductive explanations (AXp's). The cognitive limits of human decision makers motivate that succinctness is one of the key requirements of explanations of ML models. Succinct explanations are generally accepted to be easier to understand by human decision makers, but are also easier to diagnose or debug.

Decision trees (DTs) epitomize so-called interpretable machine learning models, in part because paths in the tree (which are possibly short, and so potentially succinct) represent such explanations of predictions.

Decision trees find a wide range of practical uses. Moreover, DTs are the most visible example of a collection of machine learning models that have recently been advocated as essential for high-risk applications. Decision trees also epitomize explainability approaches as a function of intrinsic interpretability.

Given a decision tree, some input and the resulting prediction, the explanation associated with that prediction is the path in the decision tree consistent with the input. This simple observation justifies in part why decision trees have been deemed interpretable for at least two decades, an observation that is widely taken for granted, and which explains the interest in learning optimal decision trees, especially in recent years, and notably when it is well-known that learning optimal (smallest) DTs is NP-hard.

The state of the art encompasses different optimality criteria, some of which are tightly related with succinctness of explanations (e.g. as measured by average path length). However, in the prior art, the succinctness of explanations of paths in DTs cannot be achieved efficiently in practice (or, in other words, is NP-hard for most of the concrete cases). Even a size-minimal DTs (referred as optimal DT) can exhibit arbitrary explanation redundancy, and in practice explanation redundancy is often observed.

There exists a need for comprehensive evidence regarding the redundancy of path-based explanations in DTs, especially for high-risk and safety-critical applications, which can be processed in a reasonable duration.

The invention aims to improve the situation.

**3. Summary of the invention**

The invention proposes a new type of method for processing decision data that does not present the drawbacks of the prior art. The decision data comprise a decision tree ($T$) and an input path ($P$) in the decision tree ($T$), each node ($r$) of the decision tree being associated with a respective feature ($i$) of a feature set ($F$).

The method is characterized by comprising at least one iteration of an inheritance processing, as a function of a current universal set ($U$), representing some features which could be irrelevant to explain the input path, the current universal set ($U$) being included in the feature set ($F$) and as a function of a current node ($r$) and a child node ($s$) linked together by an edge (($r$, $s$)). The inheritance processing comprises:

- determining that said edge (($r$, $s$)) verifies a first criterion relative to a consistency of said edge (($r$, $s$)) with a corresponding edge (($r'$, $s'$)) of the input path ($P$) relative to the same feature ($i$) as those of the current node ($r$), and then performing a first sub-inheritance processing as a function of said child node ($s$); and/or
- determining that said edge (($r$, $s$)) verifies a second criterion, and then performing a second sub-inheritance processing as a function of said child node ($s$) and the current universal set ($U$),

such that the first sub-inheritance processing and the second sub-inheritance processing allows including features in said current universal set ($U$) for explaining the input path ($P$).

The decision tree can be interpreted as structure describing a sequence of decisions, each decision being relative to a given feature. The input path can be induced by a given word, *i.e.* a sequence of values, each value being related to one feature.

One of the nodes of the decision tree is a root node, which can be visualized as the entrance of the decision tree. Thus, the input path can be interpreted as a sequence of connected edges linking the root node to a terminal node.

Each terminal node of the decision tree (i.e. each node without any child node) is associated with a class from a set of classes. The class of the terminal node of the input path is named the prediction of the input path.

Thus, this method allows to process (for example: to explore, to generate specific data, etc.) the decision tree in an efficient manner, by only processing, with the first or the second sub-inheritance processing, certain edges (or child nodes) and ignoring the others, thanks to the first criterion regarding consistency and the second sub-inheritance processing taking the current universal set into account.

Moreover, given the first criterion, every edge consistent with the input path is processed. Furthermore, given the input of the second sub-inheritance processing (the input taking into account the universality of the feature of the current node), each feature deemed to be universal leads to taking into account any child node of the current node.

These two characteristics contribute to establish if a feature is deemed irrelevant to explain the input path. It helps to determine the features that are relevant to explain the input path, the minimal set of features explaining the input path forming the abductive explanation of the input path, hereinafter noted AXp.

According to a particular characteristic of the invention, the second criterion is the negation of the first criterion.

This type of second criterion enables to perform the inheritance processing for each edge of the decision tree, without redundancy (i.e. processing the same edge multiple times) or omission of an edge.

According to a particular characteristic of the invention, the second criterion is relative to the belonging of the feature ($i$) of the current node to said current universal set ($U$).

This type of second criterion enables to treat specifically the child nodes of a current node whose feature belongs to the current universal set (*i.e.* whose feature could be irrelevant to explain the input path, regardless the actual value of the feature).

According to a particular characteristic of the invention, each node ($r$) is associated with a respective clause ($b_r$), and

- the first processing comprises adding, to a hard constraint set ($H$) representing a set of constraints that must be satisfied for a MaxSAT solver, a first inheritance clause ($b_r \rightarrow b_s$) as a function of a clause ($b_r$) associated to the current node ($r$) and of a clause ($b_s$) associated to the child node ($s$); and
- the second processing comprises adding, to the hard constraint set ($H$), a second inheritance clause ($b_r \wedge u_u \rightarrow b_s$) as a function of a clause ($b_r$) associated to the current node ($r$), of a clause ($b_s$) associated to the child node ($s$) and of an universal clause ($u_i$), belonging to the current universal set ($U$), the universal clause ($u_i$) being associated to the feature ($i$) of the current node ($r$).

Here, the inheritance processing builds a hard constraint set, intended to be given to a MaxSAT solver. A MaxSAT solver is an algorithm, a program, a device or something equivalent, that can input a hard constraint set and a soft constraint set, and outputs the broadest subset of the soft constraint set whose clauses are satisfied, while all clauses of the hard constraint set are satisfied. In other words, the hard constraint set is the set of clauses whose satisfaction is mandatory, where the soft constraint set is the set of clauses that would ideally be satisfied if it does not generated contradiction with the hard constraint set.

The set of inheritance clauses produced by the inheritance process can be interpreted as a chain of consequences over the nodes (from the current node to the child node). Thus, when the inheritance processing is performed on a set of edges linking two nodes (an upstream node and a downstream node), and when the clause of the upstream node is set at a certain value (true or false), thus the chain of consequences can imply a certain value of the downstream node (or "propagate" said value to said node), depending on the universal clauses implied in the chain of consequences.

According to a particular characteristic of the invention, the method comprises adding, to the hard constraint set ($H$):

- the clause ($b_{root(T)}$) of a root node (*root(T)*) of the decision tree ($T$);
- the clause ($b_r$) of each terminal node ($r$) of the decision tree ($T$) whose class ($\varsigma(r)$) is equal to the prediction ($c$) of the input path; and
- the negation ($\neg b_r$) of the clause of each terminal node ($r$) of the decision tree ($T$) whose class ($\varsigma(r)$) is different from the prediction ($c$) of the input path.

Here, adding clauses related to the root and the terminal nodes of the decision tree enable to process the nodes which have no parent (root node) or no child (terminal node).

Treating differently a terminal node whose class is different from the prediction of the input path implies, considering that the hard constraint set is fully satisfied, that no chain of consequences (*i.e.* no set of inheritance clauses) starting from the root node (which clause must be satisfied) leads to a contradiction for said terminal node whose class is different from the prediction if the current universal set is appropriately chosen.

A such contradiction could for example occur if the current universal set is too broad, such that the value of the clause of the root node (set as true) is "propagated" (by the chain of consequences) to a terminal node whose value is false (or, in other words, whose class is different from the prediction, thereby the negation of the clause of said terminal node must be satisfied).

According to a particular characteristic of the invention, the inheritance processing further comprises determining that the feature ($i$) of the current node ($r$) is not included in a path feature set ($\Phi(P)$) of features involved in the input path ($P$), and then adding to the hard constraint set ($H$) the universal clause ($u_i$) associated to said feature ($i$).

Given the fact that the features not included in the path feature set of the input path are irrelevant to explain the input path, adding their respective universal clause to the hard constraint set simplifies the computation of the MaxSAT solver. Indeed, the soft constraint set comprises the universal clauses (of all features). Thus, including in the hard constraint set the universal clauses of the features that are actually irrelevant to explain the input path, reduce the number of cases to be computed/tester by the MaxSAT solver.

According to a particular characteristic of the invention, the first processing and the second processing both comprises performing the inheritance processing on the child node ($s$).

Thus, the inheritance process is recursively applied on the child node of the current node, if the edge linking said nodes satisfies the first or the second criterion. The inheritance process explores the decision tree while not passing through the edges that are both inconsistent with (the corresponding edge of) the input path and non-universal regarding the feature tested by the current node. The exploration of the decision tree is thus much efficient than an exhaustive exploration.

According to a particular characteristic of the invention, the inheritance processing further comprises determining that the current node ($r$) is a terminal node, then returning the result of determining that the prediction of said current node ($r$) is different from that of the input path ($P$).

Thus, when the inheritance processing (*i.e.* the exploration of the tree) is performed on a terminal node, it returns that the class of said terminal node is different than the prediction.

Thus, if an exploration of the decision tree from the root node leads to a terminal node whose class is different from the prediction, it means that there exists an alternative path, consistent with the input path but leading to a different prediction, while considering the features belonging to the current universal set as irrelevant to explain the input path. As a consequence, it means that at least one feature of the current universal set is actually relevant to explain the path.

By contrast, if an exploration of the decision tree from the root node only leads to terminal node(s) whose class is equal to the prediction, it means that there exists no such alternative path, and as a consequence, that every feature of the current universal set is irrelevant to explain the input path.

According to a particular characteristic of the invention, the method comprises

- performing the inheritance processing at least for a root node (root($T$)) of the decision tree ($T$) for at least one current universal set ($U$), thereby returning processed tree data; and
- determining the broadest universal set ($UR$) such that said processed tree data satisfy a third criterion relative to the non-existence of an alternative path ($Q$) leading to a different prediction than that of the input path ($P$).

Here, the inheritance processing generates in response some processed tree data. For example, the processed tree data can comprise a Boolean value stating that there exists an alternative path leading to a different prediction that that of the input path while being consistent with the input path, or some inheritance clauses that could help to determine the existence of a such path.

Thus, based on said processed tree data, the broadest universal set can be determined, or in other words, the set of features deemed irrelevant for explaining the input path can be determined among the whole feature set. The complementary of said broadest universal set (in the feature set) is named the abductive explanation of the input path, or AXp.

According to a particular characteristic of the invention, for a given current universal set ($U$), the inheritance processing is performed not more than once for each node ($r$) of the decision tree ($T$).

Thus, there is no redundancy while performing the whole inheritance processing (for a given current universal set), which accelerate the inheritance processing.

According to a particular characteristic of the invention, the processed tree data comprises, for each universal set ($U$) for which the inheritance processing is performed, an alternative existence value equal to what the inheritance processing returns, the alternative existence value representing if there exists an alternative path ($Q$) consistent with said input path ($P$) and leading to a different prediction ($d$) than that ($c$) of the input path ($P$), while considering each feature of the current universal set ($U$) as universal; the third criterion being that the alternate existence value is true.

Here, once the alternative existence value is obtained (for example by exploring the decision tree by performing the inheritance processing), the actually universality of the current universal set can be established.

According to a particular characteristic of the invention, determining the broadest universal set ($UR$) comprises

- initializing the current universal set ($U$) as the complementary, in the feature set ($F$), of the path feature set $\Phi(P)$ of features involved in the input path ($P$);
- for at least one current feature ($i$) of the path feature set $\Phi(P)$:

  * adding the current feature ($i$) to the current universal set ($U$),
  * determining that the inheritance processing returns true, the inheritance processing being performed as a function of the root node (root($T$)) and of the current universal set ($U$), and then removing the current feature ($i$) from the current universal set ($U$); and

- returning the current universal set ($U$) as the broadest universal set ($UR$).

Here, the features not belonging to the path feature set are deemed as irrelevant for explaining the input path. Excluding from testing the features not belonging to the path feature set reduce the computation time of the whole determination of the broadest universal set.

Then, the remaining features (belonging to the path feature set) are tested one by one, by adding one of them into the current universal set and by performing the inheritance processing. When the inheritance processing returns the Boolean value true, it means that there exists an alternative path leading to a different prediction than that of the input path, which means that the tested feature is actually relevant to explain the input path. In this case, the tested feature is removed from the current universal set. When all features of the path feature set have been tested, the current universal set is returned as being the broadest universal set. The complementary of said broadest universal set is the minimal set of features explaining the input path, *i.e.* the AXp.

This construction of the broadest universal set is advantageously fast to compute, because each feature is tested no more than once, and the testing of this feature is performed by the exploration of the decision tree, which is quite efficient as explained above.

According to a particular characteristic of the invention, the method comprises:

- performing the inheritance processing for every node ($r$) of the decision tree ($T$) while considering the feature set ($F$) as the current universal set ($U$), thereby returning the hard constraint set ($H$) as the processed tree data; and
- the third criterion being that the hard constraint set ($H$) is entirely satisfied while considering any universal set ($U$) as a soft constraint set ($B$) in a MaxSAT solver.

Here, the inheritance processing is of the type adding clause(s) to the hard constraint set. For each edge, a respective inheritance clause is added, such that the hard constraint set encode the whole chain of consequences relative to consistency and universality. When the hard constraint set is built, a MaxSAT solver can input said hard constraint set as well as the soft constraint set (comprising the universal clause of each feature), and determining the broadest universal clause set.

Considering that each edge implies only one inheritance clause (i.e. that the inheritance set, here not recursive, is performed once per edge), the computation of the whole hard constraint set is fast.

The disclosure also relates to an electronic device for processing decision data, the decision data comprising a decision tree ($T$) and an input path ($P$) in the decision tree ($T$), each node ($r$) of the decision tree being associated with a respective feature ($i$) of a feature set ($F$). According to the disclosure, the device comprises means for processing at least one iteration of an inheritance processing, as a function of a current universal set ($U$), representing some features which could be irrelevant to explain the input path, the current universal set ($U$) being included in the feature set ($F$) and as a function of a current node ($r$) and a child node ($s$) linked together by an edge (($r, s$))*,* the inheritance processing comprising:

- determining that said edge (($r, s$)) verifies a first criterion relative to a consistency of said edge (($r, s$)) with a corresponding edge (($r', s'$)) of the input path ($P$) relative to the same feature ($i$) as those of the current node ($r$), and then performing a first sub-inheritance processing as a function of said child node ($s$); and/or
- determining that said edge (($r, s$)) verifies a second criterion, and then performing a second sub-inheritance processing as a function of said child node ($s$) and the current universal set ($U$),

such that the first sub-inheritance processing and the second sub-inheritance processing allows including features in said current universal set ($U$) for explaining the input path ($P$).

According to one implementation, the different steps of the method according to the disclosure are implemented by one or more software programs or software module programs including software instructions intended for execution by at least one data processor of a device connected to directly or indirectly to the automatic speech recognition system.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for processing data with respect to the disclosure.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for processing data with respect to the disclosure.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Drawings

Embodiments of the present disclosure can be better understood with reference to the following description and drawings, given by way of example and not limiting the scope of protection, and in which:

- **Figure 1** is an example of a decision tree to process according to the disclosure;
- **Figures 2** is a second example of a decision tree to process according to the disclosure;
- **Figure 3** is a schematic block diagram illustrating an example of processing;
- **Figure 4** is a schematic block diagram illustrating an example of processing;
- **Figure 5** is a schematic block diagram illustrating an example of processing;
- **Figure 6** is a schematic block diagram illustrating an example of processing;
- **Figure 7** is a schematic block diagram illustrating an example of processing;
- **Figure 8** shows a schematic block diagram illustrating an example of a device according to the disclosure.

The components in the figures are not necessarily to scale, emphasis instead being placed upon illustrating the principles of the disclosure.

## 5. Description

### 5.1 Context of the disclosure

#### 5.1.1 Principle of a decision tree

A decision tree is an acyclical connected graph. A decision tree *T* comprises a set of nodes *r* and a set of edges (*r, s*), each edge linking two nodes *r* and *s*. Usually, the decision tree *T* is defined as oriented, *i.e.* each edge is oriented, the first node defining the edge being call the "parent node" of the edge, and the second node defining the edge being called the "child node" of the edge. The decision tree *T* comprises at least one node without any parent, called the root node, noted *root*(*T*). The decision tree *T* also comprises at least one node without any child node, and each such node without child node is named "terminal node".

The purpose of a decision tree *T* is to classify an input, *i.e.* to input a given input word *v* (a vector of values) and to output a class *k* belonging to a class set *K*. A such word *v* comprises a list of values, each value being relative to a feature *i*. In order to classify the input word *v*, the decision tree tests some features *i* of the input word *v*, and determine a class based on these tests. The features *i* form together a feature set *F*. Each feature *i* can take a value relative to the feature. The set of possible values for a feature *i* is named the domain $D_i$ of the feature.

The input word *v* belongs to a feature space $\mathbb{F} = D_1 \times D_2 \times ... \times D_n = \times_{i=1..n} (D_i)$ which represents all words than can be input of the decision tree. The feature space $\mathbb{F}$ (*i.e.* all possible feature value combinations) must not be confused with the feature set *F* (*i.e.* all features).

Here are few examples of features and corresponding domains:

- a feature *i* is relative to the belonging to a set, the domain $D_i$ of said feature *i* is {true, false};
- a feature *i* is relative to a binary value (for example of a Boolean variable), the domain $D_i$ of said feature *i* is {true, false};
- a feature *i* is relative to an integer value (for example of an integer variable or real numbers), the domain $D_i$ of said feature *i* is {0, 1, 2};
- a feature *i* is relative to a color, the domain $D_i$ of said feature *i* is {green, dark, light};
- a feature *i* is relative to a color, the domain $D_i$ of said feature *i* is {red, blue, green};
- a feature *i* is relative to a texture, the domain $D_i$ of said feature *i* is {clear, slightly blurry, blurry};
- a feature *i* is relative to a sound, the domain $D_i$ of said feature *i* is {crisp, muffled, dull};

In order to be able to classify an input word *v*, each non-terminal node *r* is relative to a feature *i*. Each edge (*r, s*) from a parent node *r* (if the node *r* is not a terminal node) to a child node *s* is relative to an edge feature subset $\varepsilon((r,s))$ of the feature domain $D_i$ of the feature *i* of the parent node *r* ; in other words, $\varepsilon((r,s)) \subset D_i$. More specifically, said edge feature subset $\varepsilon((r, s))$ relative to said edge (*r, s*) comprises the value(s) among the possible values of the feature *i* that would lead to the child node *s*, when testing the value of the feature *i* of an input word *v* at the parent node *r*. Thus, a non-terminal node r can be visualized as a decision regarding the value of the feature *i* of an input word *v*, and if the value belongs to the subset $\varepsilon((r, s))$ of the edge (*r, s*), then the next decision to take regarding the input word *v* will be taken on the child node *s* (regarding the value of the corresponding feature of the child node *s*).

For a given node *r*, it is possible to ensure a unique decision regarding the feature *i* by adding the following constraint : given two different child nodes $s_1$, $s_2$ of a parent node *r*, the overlap between the two edge feature subsets $\varepsilon((r,s_1))$, $\varepsilon((r,s_2))$ of the two child nodes is empty : $\varepsilon((r,s_1)) \cap \varepsilon((r, s_2)) = \emptyset$. For a given node r, it is possible to guaranty that a decision regarding the feature *i* is taken by adding the following constraint: given the set of child nodes $\{s_1, ...,s_n\}$ of a parent node r, the union of the edge feature subsets $\varepsilon((r,s_1)) ... \varepsilon((r,s_n))$ of all child nodes of said parent node is equal to the domain of the feature: $\varepsilon((r,s_1)) \cup ... \cup \varepsilon((r,s_n)) = D_i$ (ε *of the parent node*).

Given a path P, the edge feature subset of the node r relative to a feature *i* ($\Phi(r) = i$) can be noted $\rho(i, P)$.

Thus, when considering an input word *v* to be classified, a decision tree T tests the (value of) each feature of the input word, beginning with the root node (*i.e.* by testing the feature relative to said root node), then the child node linked to the root node by the edge whose respective subset includes the value of the feature tested at the root node, and so on until a terminal node is reached. Once said terminal node is reached, the class of said terminal node is returned as the prediction. This whole process defines a path *P* in the decision tree, *i.e.* a sequence of nodes (or edges, which is equivalent) starting from the root node to the terminal node.

A such path can be noted $P_{root(T) \to r}$ (or "path from root(*T*) to *r*"). The terminal node of a path *P* can be noted $\tau(P)$. Considering that each terminal node is associated with a class, it is possible to define the function $\varsigma$ that inputs a given terminal node *r* and returns its class $\varsigma(r)$. With these notations, the prediction *c* of the path *P* can be expressed as follows $c = \varsigma(\tau(P))$. The feature *i* of a node *r* can be noted as $\phi(r)$.

Ideally, an input word (*i.e.* a list of value) comprises as many elements as the number of features of the feature set $F$, the $i$-th element of the input word corresponding to the feature $i$ (where $i$ is here an integer identifying the feature). It should be noted that in the context of this specification, the identifier of the feature and the feature itself can be used to name the same object, *i.e.* the feature.

*5.1.2 First example decision tree*

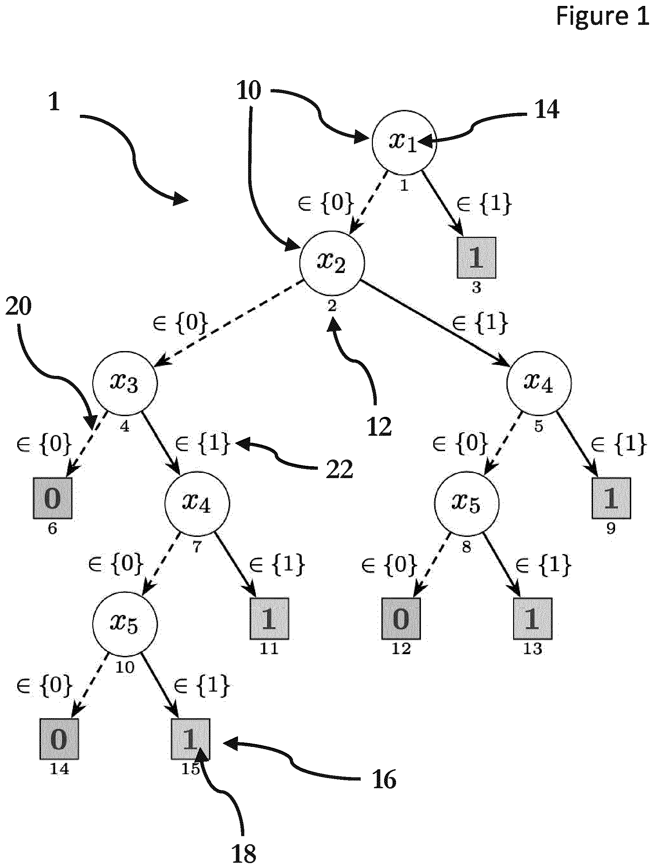

The figure 1 represents a first example decision tree 1. The first example decision tree 1 comprises a plurality of nodes 10 linked by edges 20. Here, there are fifteen nodes (seven nodes being non terminal nodes and eight nodes being terminal nodes) and fourteen edges. The first example decision tree 1 is here a binary tree, *i.e.* each non terminal node has exactly two child nodes.

Each node 10 is identified by a node identifier 12. Each non-terminal node 10 corresponds to a feature 14. Said feature 14 is noted $x_i$ in this figure and belongs to a feature set $F = \{x_1, x_2, x_3, x_4, x_5\}$ comprising five features in this example.

An edge 20 links a parent node and a child node. Said edge 20 is relative to a respective edge feature subset 22. For example:

- the edge linking the node whose identifier is "1" to the node whose identifier is "2" corresponds to the edge feature subset {0}; and
- the edge linking the node whose identifier is "1" to the node whose identifier is "3" corresponds to the edge feature subset {1}.

Some nodes 10 of the example decision tree 1 are terminal node 16. A given terminal node 16 corresponds to a class 18. In this example, the class 18 is either 0 or 1, and the class set is the set {0,1}.

An input word is a list, comprising as many elements as the number of features, *i.e.* five in this example. Considering that the possible values of a feature are either 0 or 1, the input word is a list comprising five integers, each integer being 0 or 1.

For example, for the input word $v = (0,0,1,1,0)$, the path induced by the input word comprises the nodes whose identifiers are: "1", "2", "4", "7", "11"; and the prediction (i.e. the class of the terminal node of the induced path) is "1".

It should be noted that two different input words can lead to the same prediction (for example (0,0,1,1,0) and (1,0,0,0,1) leads to the prediction "1") and even induce the same path (for example (0,0,0,1,0) and (0,0,0,0,1) both induce the path via the nodes "1", "2" and "4").

*5.1.3 Second example decision tree*

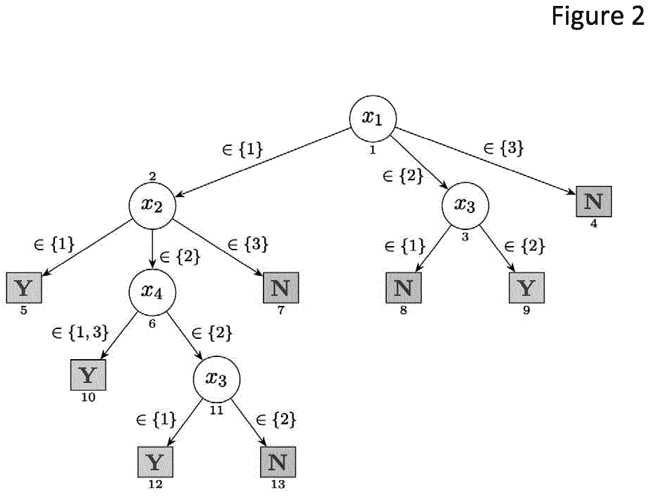

The figure 2 represents a second example decision tree 2. Unlike the first example decision tree, the second example decision tree is not a binary tree. The second example decision tree comprises thirteen nodes, five of them (nodes "1", "2", "3", "6" and "11") being non terminal and eight of them (nodes "4", "5", "7", "8", "9", "10", "12" and "13") being terminal. The class set is equal to {Y,N} (yes and no).

The edge feature subset of the edge (1, 2) is {1}, the edge feature subset of the edge (1, 3) is {2} and the edge feature subset of the edge (1, 4) is {3}. In a similar manner, the edge feature subset of the edge (6, 10) is {1,3} and the edge feature subset of the edge (6, 11) is {2}. This example illustrates that not all decision trees are binary, and not all edge feature subsets are singletons.

It should also be noted that the feature domain of the features identified by "1", "2", "4", "5", "6" is the set {1,2,3}, and the feature domain of the feature "3" is {1,2}. It illustrates that the feature domain of the features of a decision tree are not necessarily equal, or even of the same size.

*5.1.4 Abductive explanation*

A decision tree can also be defined as a classifier, *i.e.* a function $\kappa$ (named classification function) from the feature space $\mathbb{F}$ to the class set $K$, which inputs a word $v \in \mathbb{F}$ and returns a corresponding class $k \in K$ (equal to the class $k$ of the terminal node of the path induced by the input word $v$).

Given a first word $v$ and its prediction $\kappa(v)$, an explanation of said prediction (also named a weak abductive explanation) is a subset $\mathcal{X}$ of the feature set $F$ (*i.e.* $\mathcal{X} \subset F$) such that any word $x$ whose feature values $(x_i)_{i \in \mathcal{X}}$ for the features of said subset $\mathcal{X}$ are equal to the feature values $(v_i)_{i \in \mathcal{X}}$ of said first word $v$ must lead to the same prediction $\kappa(v)$. In other words, the subset $\mathcal{X}$ is a weak abductive explanation if the following condition WeakAXp($\mathcal{X}$)

is satisfied:

$$\text{WeakAXp}(\mathcal{X}) = \forall(\boldsymbol{x} \in \mathbb{F}), \left[\bigwedge_{i \in \mathcal{X}}(x_i = v_i)\right] \to (\kappa(\boldsymbol{x}) = \kappa(\boldsymbol{v}))$$

Thus, an explanation of a first word *v* and its prediction $\kappa(v)$ comprises the features that are possibly relevant to explain "why" inputting said first word *v* implies that the classifier returns a such prediction $\kappa(\boldsymbol{v})$.

The adverb possibly is important here, because some features of said explanation could actually useless (or irrelevant) to explain this prediction. More precisely, an explanation $\mathcal{X}$ could comprise a feature *i* that could be removed from the explanation $\mathcal{X}$ , the resulting explanation $\mathcal{X}$ \{i} of said removing being still an explanation. A such removing can be named a simplification of the explanation.

A weak AXp can also be defined for a path *P* in a similar manner. Given a path *P*, there exist at least one word $v_P$ inducing the path *P*, then a weak AXp for a such word $v_P$. This weak AXp for this word $v_P$ is a weak AXp for the path *P*. It should be noted any weak AXp for a given word *v* inducing a path *P* is a weak AXp for every other word inducing the same path *P* (because the same chain of decision, *i.e.* of nodes and edges traversed in the tree, have been taken to lead to the terminal node and the prediction).

As its name suggests, the more an explanation is short, the more the explanation is humanly interpretable. It is especially true when an explanation is derived from an actual decision tree of a big machine learning model (such as a deep learning model). When an explanation cannot be simplified as defined above, this explanation can be designated as the abductive explanation of the prediction. Thus, the AXp is the minimal/irreducible of the weak AXp (for a word or for a path).

5.2 General principle of the invention

The main purpose of the invention is efficiency compute a such AXp. To that end, the invention proposes an elementary inheritance processing of a node, described hereinafter.

*5.2.1 Elementary inheritance processing of a node*

A method according to the invention is implemented via an electronic device able to process data sources. The method is intended to process decision data, the decision data comprising a decision tree *T* and an input path *P* in the decision tree *T*.

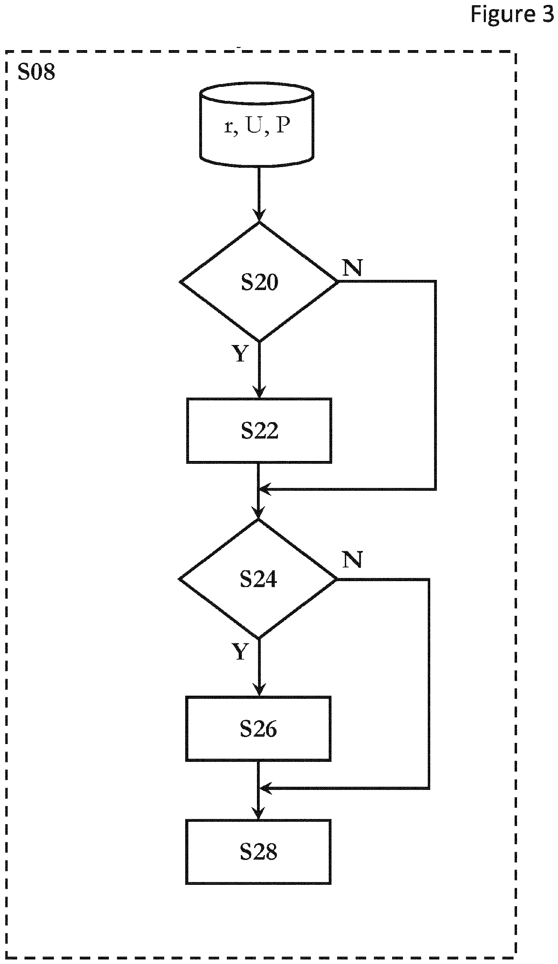

The method comprises at least one iteration of an inheritance processing, said inheritance processing being schematically represented in the figure 3.

The inheritance processing S08 can be visualized as a function of a current universal set *U*, of a current node r and of a child node s. The current node r and the child node s are linked together by an edge (*r, s*). The universal set *U* represents some features which could be irrelevant to explain the input path *P*. The current universal set *U* is a subset of the feature set *F*.

The inheritance processing S08 comprises a step S20 for determining the satisfaction of a first criterion, a step S22 for performing a first sub-inheritance processing, a step S24 for determining the satisfaction of a second criterion and a step S26 for performing a second sub-inheritance processing. The first sub-inheritance processing is triggered by the satisfaction of the first criterion during the step S20. The second sub-inheritance processing is triggered by the satisfaction of the second criterion during the step S24. The inheritance processing S08 ends at a step S28.

The first criterion is relative to a consistency of the edge (*r, s*) with a corresponding edge (*r',s'*) of the input path *P* (where *r', s'* are two consecutive nodes of the input path *P*). The corresponding edge (*r', s'*) is relative to the same feature *i* as those of the current node *r*. In other words, the parent node *r'* of the corresponding edge (*r', s'*) and the current node *r* are associated with the same feature *i* (*i.e* are testing the same feature i).

The edges (*r, s*) and (*r', s'*) are considered as consistent if their respective edge feature subsets $\varepsilon((r, s))$ and $\varepsilon((r', s'))$ have a non-empty intersection, *i.e.* there exist at least one feature value $x_i$ (in $D_i$) that is included in both subsets $\varepsilon((r, s))$ and $\varepsilon((r',s'))$. An edge (*r,s*) is stated consistent with the input path P if the path P comprises a such edge (*r', s'*).

If a such consistency is established, it means that, given two words *x* and *y* having a such value $x_i$ for the feature *i,* and considering that the first word *x* induces the input path *P*, if the other word *y* induces a path $P_y$ comprising the current node *r*, said path must also include the child node s (*i.e.* pass through the edge (*r, s*)).

In an example of the invention, the first criterion is the satisfaction of consistency between the edge (*r, s*) and the corresponding edge (*r', s'*) in the input path *P*.

The first sub-inheritance processing comprises a function of the child node $s$. The second inheritance processing comprises a function of the child node s and of the current universal set $U$.

The first sub-inheritance processing S22 and the second sub-inheritance S26 are intended to allows including features in said current universal set $U$ for explaining the input path $P$. In other words, these first and second sub-inheritance processing contribute to determine the AXp of the path $P$.

In an example of the invention, the second criterion is the negation of the first criterion.

In another example of the invention, the second criterion is relative to the belonging of the feature $i$ of the current node $r$ to said current universal set $U$.

*5.2.2 Determination of the broadest universal set*

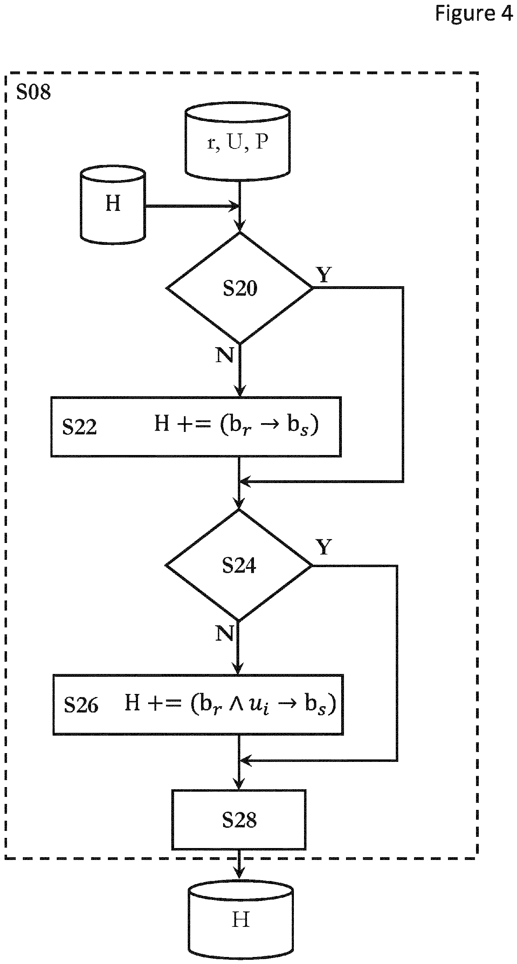

Figure 4 represents a schematic view of an example of the invention. In an example of the invention, the method comprises performing the inheritance processing S08 at least for a root node root($T$) of the decision tree $T$ for at least one current universal set $U$, thereby returning processed tree data. Then, the method comprises determining the broadest universal set $UR$ such that said processed tree data satisfy a third criterion relative to the non-existence of an alternative path $Q$ leading to a different prediction than that of the input path $P$.

The broadest universal set $UR$ is the complementary of the AXp (i.e. the smallest weak AXp) in the feature set $F$.

In other words, the elementary inheritance processing is performed at least for the root node, thereby the broadest universal set $UR$ can be determined.

In an example of the invention, the inheritance processing is performed not more than once for each node r of the decision tree $T$. This condition ensures that the complexity of the determination of the broadest universal set $UR$ (*i.e.* the AXp) is reasonable.

5.3 First example of embodiment of the disclosure

*5.3.1 Building of a hard constraint set*

In an example of the invention, represented figure 4, the method comprises the building of two sets of clauses that can be used so as to determine the broadest universal set $UR$. More specifically, the two sets can be input by a MaxSAT solver and determine the broadest universal set $UR$.

A MaxSAT solver is a device, computer program or equivalent that can input a hard constraint set $H$ (comprising clauses that must be satisfied) and a soft constraint set $B$ (comprising clauses that should be satisfied, if possible), and determine the broadest subset $UR$ of the soft constraint set $B$ whose clauses are satisfied while every clause of the hard constraint set $H$ is satisfied. For example, the article Marques-Silva J., Ignatiev A., Morgado A. (2017) *"Horn Maximum Satisfiability: Reductions, Algorithms and Applications."* In: Oliveira E., Gama J., Vale Z., Lopes Cardoso H. (eds) Progress in Artificial Intelligence. EPIA 2017. Lecture Notes in Computer Science, vol 10423. Springer, Cham. https://doi.org/10.1007/978-3-319-65340-2_56 describes a MaxSAT solver specifically designed for solving Horn formulae, such that its runtime complexity is polynomial.

In this example of the invention, each node $r$ is associated with a respective clause $b_r$. Said clause $b_r$ can be interpreted as a "blocking clause", involved in a chain of consequences induced by the hard constraint set, as it will be described hereinafter. The term "blocking" is employed here because when a given node presents a blocking clause equal to false (either by an arbitrary constraint or by the consequences of the chain of consequences), said given node "blocks" a certain propagation to its child nodes. The nature of the chain of consequences will be further described hereinafter.

Each feature $i$ is associated with a universal clause $u_i$ that represents if said clause is actually universal or not. The set of these universal clauses is the soft constraint set B. Thus, in this example, the current universal set $U$ is a subset of the soft constraint set $B$. More specifically:

- during the building of the hard constraint set H by the iterations of the inheritance processing, the current universal set $U$ can be considered as the soft constraint set $B$, and
- during the determination of the broadest universal set UR by a MaxSAT solver, the current universal set $U$ is a variable inside the MaxSAT solver, that can vary between the empty set and the soft constraint set $B$. Universal set $U$ is the set of $u_i$ that are satisfied by the solver.

Here, the first sub-inheritance processing S22 (which inputs the current node $r$ and its child node $s$) comprises adding, to the hard constraint set $H$,

(H1) a first inheritance clause $b_r \rightarrow b_s$.

As its form suggests, the first inheritance clause is function of the clause $b_r$ associated to the current node $r$

and of the clause $b_s$ associated to the child node s. This clause can also be written as $(\neg b_r) \lor b_s$, which is logically equivalent to $b_r \to b_s$.

The second sub-inheritance S26 processing (which inputs the current node $r$, its child node $s$ and the feature $i$ of the current node $r$) comprises adding, to the hard constraint set $H$,

(H2) a second inheritance clause $b_r \land u_u \to b_s$.

The second inheritance clause is function of a clause $b_r$ associated to the current node $r$, of a clause $b_s$ associated to the child node $s$ and of an universal clause $u_i$, belonging to the current universal set $U$, the universal clause $u_i$ being associated to the feature $i$ of the current node r. This clause can also be written as $\neg(b_r \land u_u) \lor b_s$, which is logically equivalent to $b_r \land u_u \to b_s$.

Thus, the inheritance processing builds a hard constraint set $H$ comprising first inheritance clauses and second inheritance clauses. If the inheritance processing is applied on every edge of the decision tree, the resulting inheritance clauses form together a chain of logical consequences that downward traverses the decision tree.

In an example of the invention, the method further comprises adding, to the hard constraint set $H$, the following clauses:

(H3) the clause $b_{\text{root}(T)}$ of the root node root($T$) of the decision tree $T$;

(H4) the clause $b_r$ of each terminal node $r$ of the decision tree $T$ whose class $\varsigma$ ($r$) is equal to the prediction $c$ of the input path; and

(H5) the negation $\neg b_r$ of the clause of each terminal node $r$ of the decision tree $T$ whose class $\varsigma$ ($r$) is different from the prediction $c$ of the input path.

In this example, each terminal node is labeled, regarding its consistency with the input path (*i.e.* the equality of its class comparing to the class of the terminal node of the input path). We can name the clause $b_{\text{root}(T)}$ the "root clause", and the clauses $b_r$ and $\neg b_r$ of the terminal nodes the "terminal clauses".

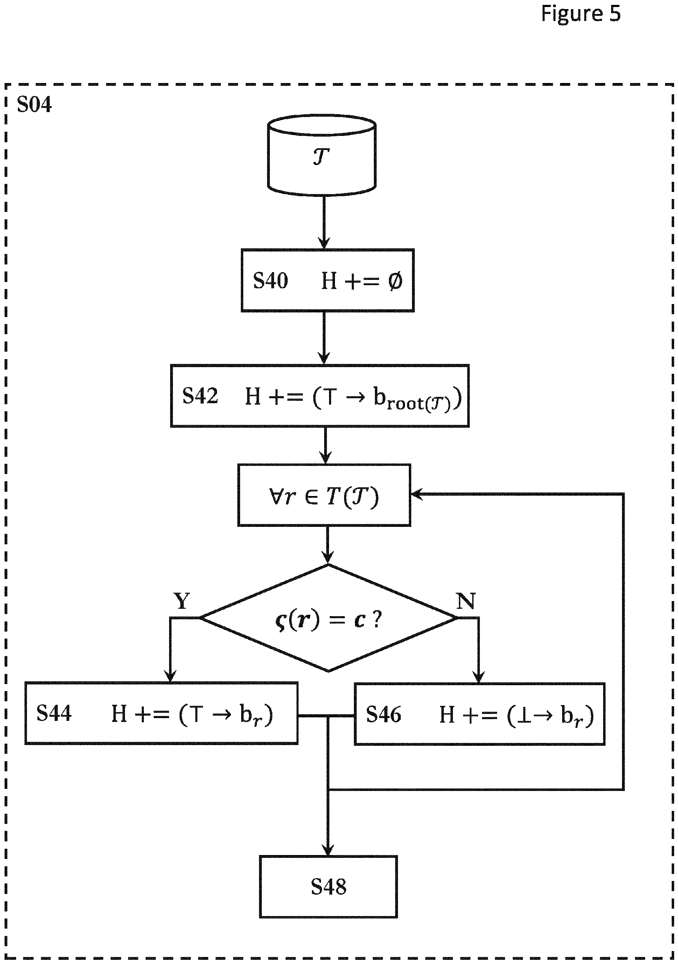

In an example of the invention, the method begins with an initialization procedure S04 comprising setting the hard constraint set H as empty in a step S40, then adding the root clause in a step S42, and else adding the terminal clauses in steps S44 and S46 (regarding the consistency of the class of the considered terminal node), as represented figure 5. Then, the initialization procedure S04 ends in a step S48. The inheritance processing S08 can be performed either or after the initialization procedure S04. The sign "+=" in the figures designates incrementing the hard constraint set with an element (*i.e.* a clause).

As a consequence, the hard constraint set also comprises clauses relative to the root node and to each terminal node. These clauses connect to the chain of consequences described hereinabove, as it will be explained below.

In an alternative embodiment, the addition can be made during the inheritance processing. In this alternative, when the inheritance processing inputs a current node, the inheritance processing determines if the current node is the root node, then adds the root clause to the hard constraint set H, else determine if the current node is a terminal node, then add the corresponding terminal clause (regarding the consistency of the terminal node with the prediction) to the hard constraint set $H$.

In an alternative embodiment, it is possible to add the clause $T \to b_r$ instead of the clause $b_r$ itself, which is logically equivalent. Analogously, it is possible to add the clause $b_r \to \bot$ instead of the negation of the clause $b_r$, which is also logically equivalent.

In an example of the invention, the inheritance processing further comprises determining that the feature $i$ of the current node $r$ is not included in the path feature set $\Phi(P)$ of features involved in the input path $P$. Then, if said feature $i$ is actually not in said path feature set $\Phi(P)$, adding, to the hard constraint set $H$,

(H6) the universal clause $u_i$ associated to said feature $i$.

Thus, when a feature $i$ does not belong to the path feature set $\Phi(P)$, this feature is not relevant to explain the input path $P$ (*i.e.* not belonging to the AXp of $P$). Adding the corresponding universal clause $u_i$ to the hard constraint set reduces the time needed to determine the broadest universal set $UR$.

In an example of the invention, the method comprises performing the inheritance processing for every node $r$ of the decision tree $T$ while considering the feature set $F$ as the current universal set $U$, thereby returning the hard constraint set $H$ as the processed tree data. Then, the third criterion used to determine the broadest universal set $UR$ is that the hard constraint set $H$ is entirely satisfied while considering any universal set $U$ as a soft constraint set $B$ in the MaxSAT solver.

Thus, in this case, the inheritance processing, once applied to every node of the decision tree, result in a hard constraint set $H$ comprising a chain of consequences (the inheritance clauses linking the nodes to their child nodes), a "initializing clause" (the root clause) and at least one terminal clause.

Thus, when the processed tree data (*i.e.* the hard constraint set) and the soft constraint set are input by a MaxSAT solver, the broadest subset of clauses of the soft constraint set $B$ that are satisfied while the hard constraint set $H$ is entirely satisfied is determined.

It is possible to visualize the hard constraint set as follows. As described above, the inheritance clauses (noted H1 and H2) form together a "chain of consequences" traversing the whole decision tree, and the root clause (root clause H1) "initializes" the chain of consequences

Thus, given a current universal set $U$ - *i.e.* a list of universal value $u_i$ declared true (*i.e.* satisfied), while the others are declared as false, this initialization is propagated by the inheritance clause(s) to the child nodes of the root node, then their respective child nodes, etc. At a given point, this chain of consequences propagate the true value to the terminal node(s) whose path $P_{\text{root}(T) \to r}$ from the root node does not involve a universal feature (*i.e.* there is no feature $i$ involved said path $P_{\text{root}(T) \to r}$ such that $u_i$ is satisfied, *i.e.* such that said feature $i$ is universal).

Thus, when this chain of consequence reaches said given terminal node $r$, *i.e.* the true value T is propagated via a chain of inheritance clauses to said terminal node, there are two cases:

(i) If the class $\varsigma$ ($r$) of said terminal node is equal to the prediction $c$ (*i.e.* the class of the terminal node of the input path $P$), then there is no inconsistency: the clause of the terminal node is satisfied by both adding the terminal clause to the hard constraint set $H$ and by the chain of consequences that propagates the true value to the terminal node $r$.

(i) If the class $\varsigma$ ($r$) is different from the prediction $c$, there is an inconsistency: the terminal clause $b_r$ cannot be both false (because the negation $\neg b_r$ of the clause of said terminal node has been added to the hard constraint set $H$, *i.e.* said negation $\neg b_r$ must be satisfied, *i.e.* said clause $b_r$ must be satisfied) and true (because the true value is inherited from the chain of consequences propagating the true value from the root node among the induced path $P_{\text{root}(T) \to r}$ to the terminal node $r$). As a consequence, it means that there is a feature $i$ among the features involved in the path $P_{\text{root}(T) \to r}$ whose universal clause $u_i$ should have a different value.

### 5.3.2 Example of constraint sets

Given the decision tree represented in figure 1, and the path induced by the word $v$ = (0,0,1,0,1) (*i.e.* $P_{1 \to 15}$ where "1" and "15" are the identifiers of the nodes), the hard constraint set $H$ comprises the following clauses (where ($H$1) and ($H$2) represents the inheritances clauses, ($H$3) the root clause and ($H$4) and ($H$5) the terminal clauses):

| ($H$1) | $\{(b_1 \to b_2), (b_2 \to b_4), (b_4 \to b_7), (b_5 \to b_9), (b_7 \to b_{10}), (b_8 \to b_{13}), (b_{10} \to b_{15})\}$ |
|---|---|
| ($H$2) | $\{(b_1 \wedge u_1 \to b_3), (b_2 \wedge u_2 \to b_5), (b_4 \wedge u_3 \to b_6), (b_5 \wedge u_4 \to b_9), (b_7 \wedge u_4 \to b_{11}), (b_8 \wedge u_5 \to b_{12}), (b_{10} \wedge u_5 \to b_{14})\}$ |
| ($H$3) | $\{(b_1)\}$ |
| ($H$4) | $\{(b_3),(b_9),(b_{11}),(b_{13}),(b_{15})\}$ |
| ($H$5) | $\{(\neg b_6), (\neg b_{12}), (\neg b_{14}))$ |

And the soft constraint set $B$ is the following: $\{(u_1), (u_2), (u_3), (u_4), (u_5)\}$.

In the example where the above-described clause (H6) is added, other clauses (universal clauses of the features not involved in the input path) must be added to the hard constraint set $H$. In this case, and considering the word $v$ = (0,1,1,1,0), so the path $P_{1 \to 9}$, the hard constraint set $H$ also comprises (H6): $\{(u_3), (u_5)\}$.

### 5.3.3 Encoding of the constraint sets

As described above, the inheritance processing delivers processed tree data comprising the hard constraint set $H$, as well as eventually the soft constraint set $B$. The soft constraint set $B$ can be output separately, considering the fact that it is common to all input path, and inherent to the decision tree. It enables to compute said soft constraint $B$ only once (for a given decision tree), and not for each AXp computation for different input paths.

These processed tree data can be in the form of a list of elements, or alternatively in the form of a one-line table (each cell comprising a clause). It can also be in the form of a multiple-lines tables, such the one described above, each line being for a type of clause (H1, H2, H3, H4, H5 and H6 if the latter exists).

The atomic clauses - *i.e.* the clauses that cannot be split, such that the clauses $b_r$ (each associated to a node $r$) and the universal clauses $u_i$ - can be in the form of a string of a certain type.

For example, a clause $b_r$ relative to the node $r$ can be encoded in the processed tree data as the following string "_b_r_" where $r$ is replaced by the identifier of the node $r$, the underscore strings "_" serving as separators, and

the clause $u_i$ can be encoded as "_u_i_". More generally, any form processable by a MaxSAT solver (or even a SAT solver) can be used.

The combination of atomic clauses, for example to recite an inheritance clause (with the implication operator →) or a terminal clause (with the negation operator ¬) can be of any form processable by a MaxSAT solver. For example, it is possible to encode such clauses as follows: "IMPLIES(_b_1_, _b_2_)" for the clause $b_1 \rightarrow b_2$, or "AND(NOR(_b_1_),_b_2_)" for the equivalent $\neg b_1 \wedge b_2$.

If necessary, the processed tree data can be stored in the form of clauses as described above, then processed into a suitable syntax for a given SAT solver.

5.4. Second example of embodiment of the disclosure (tree traversal)

*5.4.1. Recursive tree traversal*

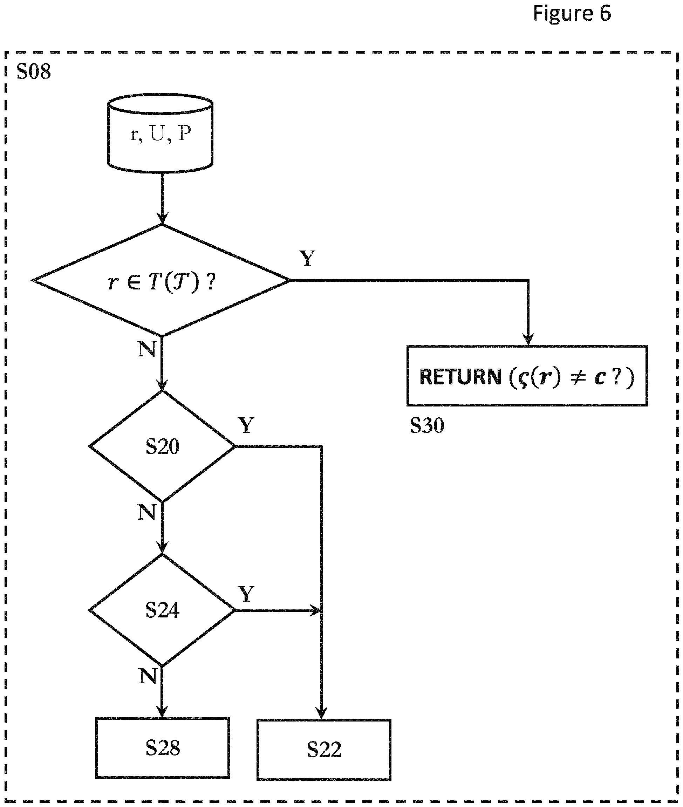

In another example of the invention, represented figure 6, the inheritance processing comprises a recursive tree traversal. More specifically, the first sub-inheritance processing and the second sub-inheritance processing both comprises performing the inheritance processing on the child node s.

Thus, when the inheritance processing is called, then performed on a current node $r$, if any of the child nodes $s$ of the current node $r$ satisfies the first or the second criterion, then the inheritance processing is performed on said child node s. As a consequence, the inheritance processing recursively traverses the decision tree.

In an example of the invention, if the first and the second criterion are both satisfied, the inheritance processing is performed only once. It avoids redundancy, and thus reduce the computation time required to perform the whole inheritance processing.

In an example of the invention, the inheritance processing comprises determining that the current node (on which the inheritance processing is applied) is a terminal node. Then, if determining returns true, the inheritance processing comprises returning the result of determining that the prediction of said current node $r$ is different from that of the input path $P$. In other words, if the terminal node is consistent with the prediction $c$ of the input path (*i.e.* the class $\varsigma(r)$ of the terminal node $r$ is equal to the prediction $c$), then the inheritance processing returns false. Else, the inheritance processing returns true. This terminal ending portion of the inheritance processing help to ends the inheritance processing when it reaches a terminal node.

In this example, the first criterion is the consistency of the edge $(r, s)$ with the path $P$. As a reminder of the above-recited explanation of the consistency concept, the consistency can be expressed as the non-empty intersection of

- the edge feature subset $\varepsilon((r, s))$ of the edge $(r, s)$ and
- the edge feature set $\rho(i, P)$ of the edge of the input path P relative to the same feature $i$ as the current node $r$ ($i = \phi(r)$).

In this example, the second criterion is the belonging of the feature $i$ tested in the current node $r$ (*i.e.* $\phi(r) = i$) to the current universal set $U$.

Thus, the first criterion can be expressed as $(\rho(\phi(r), P) \cap \varepsilon((r, s)) \neq \emptyset)$. The second criterion can be expressed as ($i \in U$).

When the current node $r$ is not a terminal node, and when no child node s of the terminal node satisfies the first criterion or the second criterion, the inheritance processing returns false.

To summarize the above-recited example of inheritance processing, it is possible to describe it as the following example of inheritance processing:

```
Function EXISTSCONSISTENTQPATH(P, U, r)

    if (r is a terminal node)

        then if ς(r) ≠ ς(τ(P))

            then return true;

            else return false;
```

```
foreach s child of r do
    if (ϕ(r) ∈ U) ∨ (ρ(ϕ(r), P) ∩ ε((r, s)) ≠ ∅)
        then if EXISTSCONSISTENTQPATH(P, U, s)
            then return true;
return false;
```

The first part of the above-recited example of inheritance processing is the terminal node ending above-described.

The second part of the above-recited example of inheritance processing test, for each child node s of the current node r, the first criterion and the second criterion. If one (or both) of these first and second criterion is satisfied, then the inheritance processing is performed on said child node s.

Thus, the inheritance processing is performed on every child node of a current node, until a terminal node is reached (or a node which does not present any child node such that either the first or the second criterion is satisfied). Then, the inheritance processing returns a Boolean value (true or false) as the result of the inheritance processing.

The result returned by the inheritance processing is an alternative existence value. This value returned by the inheritance processing once applied on a current node $r$ represents the existence of (at least) an alternative path $Q$ in the decision tree $T$, starting from said current node $r$ and leading to a different prediction $\varsigma(\tau(Q))$ than that $\varsigma(\tau(P))$ of the input path $P$, while being consistent with the input path $P$ for the non-universal features.

*5.4.2 Determination of the universality of a feature*

Thus, the above-recited inheritance processing makes possible to determine that another feature $i$ is actually universal or not, given a universal feature set $U$ of features that are actually universal. Eventually, it is possible to start with an empty universal feature set $U$.

For this purpose, the method according to an example of the invention first comprises adding a current feature $i$ to be tested to the current universal set $U$ (comprising features that are actually universal, either by previous testing or by another way establishing the universality). Then, the method comprises performing the inheritance processing, for the input path $P$, the root node root($T$) and the current universal feature set $U$.

Here, as explained above, the inheritance processing returns an alternative existence value that represents the existence of (at least) an alternative path $Q$ in the decision tree $T$, starting from the root node root($T$) and leading to a different prediction $\varsigma(\tau(Q))$ than that $\varsigma(\tau(P))$ of the input path $P$, while being consistent with the input path $P$ for the non-universal features (i.e. the features not belonging to the current universal set $U$).

Then, if said value returned by the inheritance processing is true, it means that the current feature $i$ is actually relevant to explain the input path $P$, because the inclusion of the current feature $i$ to the current universal set $U$ implies that there exists a such alternative path $Q$ consistent with the input path $P$ while leading to a different prediction). In this case, the current feature $i$ cannot be universal (it must be fixed/restricted to its domain in $P$). The current feature $i$ is removed from the current universal set $U$.

Thus, the method according to the invention can determine, for a given feature $i$, and given a current universal set $U$ of features that are actually universal, if said given feature is universal or not (or, in other words, if said feature belongs to the AXp of the input path $P$).

*5.4.3 Example of tree traversal*

This part describes an example of a tree traversal for a given input path and a given current node. The quoted number refers to the node they identify. For a better readability, the first criterion is here named the consistency criterion (regarding a certain feature), while the second criterion is named the universality criterion (over a certain feature).

Considering the decision tree represented figure 1, the input path $P_{1 \to 9}$ = (1, 2, 4, 7,11), and the root node identified by "1" as the current node from which the inheritance processing starts.

Considering the current universal set $U = F \backslash \Phi(P) = \{x_5\}$, *i.e.* that the universal features are only that which are not involved in the input path $P$, the only child node of "1" satisfying either the first or the second criterion is "2", then "4", then "7", then "11". Then, the inheritance processing returns false. Obviously, it means that no feature not involved in the input path is actually relevant to explain said input path.

Now let's consider the current universal set $U = \{x_2, x_5\}$. The inheritance processing pass through "1", then "2" (consistency criterion over $x_1$), then "4" and "5" (universality criterion over $x_2$), and

- starting from "4", then "7" then "11" (consistency criterion over $x_3$ then $x_4$), and
- starting from "5", then "9" (consistency criterion over $x_4$).

The two terminal nodes reached here both returns false (because of being associated with the class 1). Thus, the feature $x_2$ is not relevant to explain the input path $P_{1\to9}$ As a consequence, the AXp of the input path $P_{1\to9}$ does not include $x_2$.

*5.4.4 Determination of the broadest universal set*

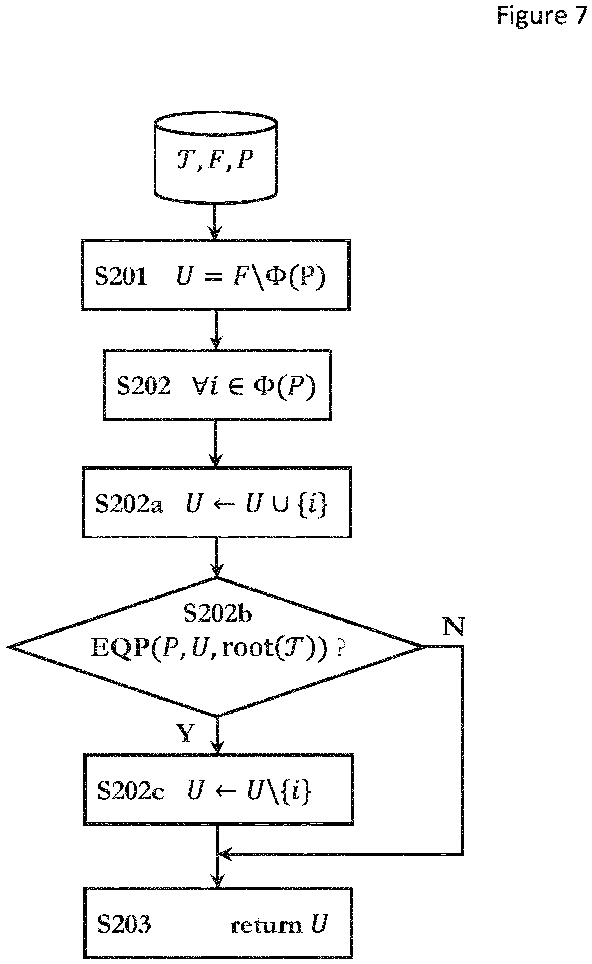

In an example of the invention, represented figure 7, the method comprises the following steps:

(S201) initializing the current universal set $U$ as the complementary, in the feature set $F$, of the path feature set $\Phi(P)$ of features involved in the input path $P$;
(S202) for at least one current feature $i$ of the path feature set $\Phi(P)$:

(S202a) adding the current feature $i$ to the current universal set $U$;
(S202b) determining that the inheritance processing returns true once performed on the root node $\text{root}(T)$, considering the current universal set $U$ and the input path $P$;
(S202c) removing the current feature $i$ from the current universal set $U$ if the inheritance processing returns true;

(S203) returning the current universal set $U$ as the broadest universal set $UR$.

In an example of the invention, the step (2) is performed for each feature of the path feature set $\Phi(P)$.
This example of the method according to the invention can be summarized as follows (where EXISTSCONSISTENTQPATH is the inheritance processing, noted EQP in figure 7), and where the broadest universal set UR is the current universal set $U$ returned by the function UR):

```
UR(𝒯, F, P)
        U ← F\Φ(P);                                // step (S201)
        foreach i ∈ Φ(P) do                         // step (S202)
            U ← U ∪ {i};                            // step (S202a)
            If EXISTSCONSISTENTQPATH(P, U, root(𝒯))  // step (S202b)
                then U ← U\{i}                       // step (S202c)
        returns U;                                  // step (S203)
```

Alternatively, the method can return $F\backslash U$ instead of $U$, *i.e.* the AXp of the input path $P$.
Thus, the example of the method according to the invention comprises testing each feature involved in the input path $P$ in order to determine if said feature is actually relevant to explain the input path (*i.e.* belongs to the AXp of the input path $P$).
Considering that the inheritance processing traverses the decision tree in a much faster pace that a traditional exhaustive tree traversal, determination of the alternative existence value is quicker, so computation of the AXp (or the broadest universal set $UR$).

*5.5. Probabilistic path abductive explanations (P2AXp's)*

In previous examples and explanations, it has been described deterministic computation of abductive explanations (AXp's), in which the universal features are actually universal, in a deterministic (i.e. certain) manner.
In an alternative example, the method of the invention comprises determining a probabilistic path abductive explanation (P2AXp's).
In this case of probabilistic path AXp's, a given feature is declared universal if the number of paths passing through any node with said feature and leading to a different class (than the result tested) is sufficiently small. In other words, it means that the probability that this given feature is not actually universal is small enough. In such a case, one can consider that the probability of a different class is small enough, and that in consequence, this different class is not considered as part of the actual possibilities offered by the feature.

The goal here is to trade off a bit of rigor by a smaller size explanation (compared to the above-described deterministic computation).

Given a selection of features in the explanation (i.e. a set $\mathcal{X} \subseteq$ F) and a set of universal features (i.e. a set U $\subseteq$ F) such that $\mathcal{X} \cup U \subseteq$ F and $\mathcal{X} \cap U = \emptyset$, then it is possible to compute each individual path probability. Thus, it is possible to compute $Pr_x\big(\kappa(x) = c \mid x_\chi = v_\chi\big)$.

Given a target $\delta \in [0,1]$, the goal of a computation of a probabilistic path AXp's is to find a set $\mathcal{X} \subseteq$ F such that

$$Pr_x\big(\kappa(x) = c \mid x_\chi = v_\chi\big) \geq \delta$$

The inventor has noticed that, in practice, the set X computed with the above-referenced method is often minimal (although not mandatory in rare cases). In addition, the algorithms described in previous example can still be used, even if the starting point of the algorithm is not necessarily deterministic.

*5.6. Other technical aspects*

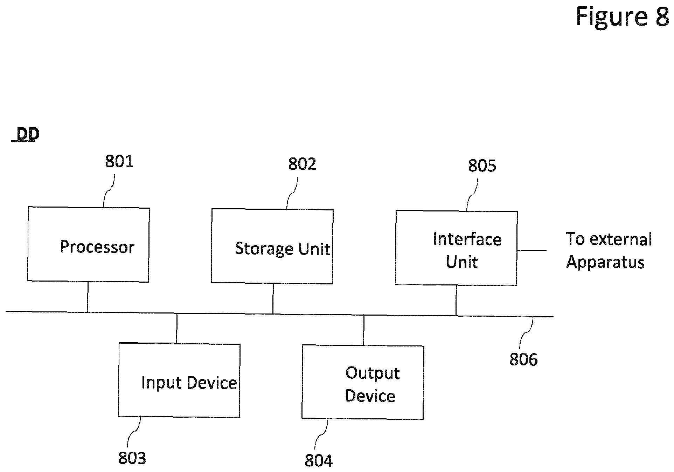

Figure 8 shows a schematic block diagram illustrating an example of a device DD according to an embodiment of the present disclosure. In some embodiments, the device DD is connected to or embedded into a communication device (development environment, database server, cloud-based service) configured for processing database. In another embodiment, the device DD is implemented on a cloud infrastructure service, alongside with a distant database server for example. Whatever the embodiment considered, the device DD is connected to Database server, either directly or indirectly through a communication device.

Referring back to figure 8, the device DD includes a processor 801, a storage unit 802, an input device 803, an output device 804, and an interface unit 805 which are connected by a bus 806. Of course, constituent elements of the device DD may be connected by a connection other than a bus connection using the bus 806.

The processor 801 controls operations of the device DD. The storage unit 802 stores at least one program to be executed by the processor 801, and various data, including for example parameters used by computations performed by the processor 801, intermediate data of computations performed by the processor 801 such as decision trees, decision data, statistics, and the like. The processor 801 is formed by suitable hardware, or software, or a combination of hardware and software. For example, the processor 801 is formed by dedicated hardware such as a processing circuit, or by a programmable processing unit such as a CPU (Central Processing Unit) that executes a program stored in a memory thereof.

The storage unit 802 is formed by any suitable storage or means capable of storing the program, data, or the like in a computer-readable manner. Examples of the storage unit 802 include non-transitory computer-readable storage media such as semiconductor memory devices, and magnetic, optical, or magneto-optical recording media loaded into a read and write unit. The program causes the processor 801 to perform a method for processing decision data, said method being implemented via an electronic device for processing data sources, the decision data comprising a decision tree (T) and an input path (P) in the decision tree (T), each node (r) of the decision tree being associated with a respective feature (i) of a feature set (F)according to an embodiment of the present disclosure as described previously. More particularly, the program causes the processor 801 to perform iterations of an inheritance processing, as a function of a current universal set (U), representing some features which could be irrelevant to explain the input path, the current universal set (U) being included in the feature set (F) and as a function of a current node (r) and a child node (s) linked together by an edge ((r,s)), as explained herein before.

The input device 803 is formed for example by a keyboard or a mouse, when needed.

The output device 804 is formed for example by a processing unit configured to determine features and path which allows explaining a decision in a decision tree.

The interface unit 805 provides an interface between the device DD and an external apparatus and/or system. The interface unit 805 is typically a communication interface allowing the device to communicate with other devices connected to a network, such as database servers. The interface unit 805 may be used to obtain the database statistics thru a dedicated API. The interface unit 805 may also be used to transmit a result of a calculation, for a path or a decision tree.

Although only one processor 801 is shown on figure 8, it must be understood that such a processor may include different modules and units embodying the functions carried out by device DD according to embodiments of the present disclosure. These modules and units may also be embodied in several processors 801 communicating and co-operating with each other.

While the disclosure has been described with reference to exemplary embodiments, it is to be understood that the disclosure can be embodied in various forms, and is not to be limited to the examples discussed above.

One or more aspects of the disclosure may be embodied in computer-usable data or computer-executable instructions, such as in one or more program modules, executed by one or more computers or other devices to perform the operations described herein. Generally, program modules include routines, programs, objects, components, data structures, and the like that perform particular tasks or implement particular abstract data types when executed by one or more processors in a computer or other data processing device. The computer-executable instructions may be stored as computer-readable instructions on a computer-readable medium such as a hard disk, optical disk, removable storage media, solid-state memory, RAM, and the like. The functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

Various aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). In general, the one or more computer-readable media may be and/or include one or more non-transitory computer-readable media.

## Claims

1. Method for processing decision data, said method being implemented via an electronic device for processing data sources, the decision data comprising a decision tree ($T$) and an input path ($P$) in the decision tree ($T$), each node ($r$) of the decision tree being associated with a respective feature ($i$) of a feature set ($F$),
the method being **characterized in that** it comprises at least one iteration of an inheritance processing, as a function of a current universal set ($U$), representing some features which could be irrelevant to explain the input path, the current universal set ($U$) being included in the feature set ($F$) and as a function of a current node ($r$) and a child node ($s$) linked together by an edge ($(r, s)$), the inheritance processing comprising:

   - determining that said edge ($(r, s)$) verifies a first criterion relative to a consistency of said edge ($(r, s)$) with a corresponding edge ($(r', s')$) of the input path ($P$) relative to the same feature ($i$) as those of the current node ($r$), and then performing a first sub-inheritance processing as a function of said child node ($s$); and/or
   - determining that said edge ($(r, s)$) verifies a second criterion, and then performing a second sub-inheritance processing as a function of said child node ($s$) and the current universal set ($U$), such that the first sub-inheritance processing and the second sub-inheritance processing allows including features in said current universal set ($U$) for explaining the input path ($P$).

2. Method according to claim 1, **characterized in that** the second criterion is the negation of the first criterion.

3. Method according to claim 1, **characterized in that** the second criterion is relative to the belonging of the feature ($i$) of the current node to said current universal set ($U$).

4. Method according to claim 1, wherein each node ($r$) is associated with a respective clause ($b_r$), and wherein:

   - the first sub-inheritance processing comprises adding, to a hard constraint set ($H$) representing a set of constraints that must be satisfied for a MaxSAT solver, a first inheritance clause ($b_r \rightarrow b_s$) the first inheritance clause being function of a clause ($b_r$) associated to the current node ($r$) and of a clause ($b_s$) associated to the child node ($s$); and
   - the second sub-inheritance processing comprises adding, to the hard constraint set ($H$), a second inheritance clause ($b_r \wedge u_u \rightarrow b_s$) being function of a clause ($b_r$) associated to the current node ($r$), of a clause ($b_s$) associated

to the child node ($s$) and of an universal clause ($u_i$), belonging to the current universal set ($U$), the universal clause ($u_i$) being associated to the feature ($i$) of the current node ($r$).

5. Method according to claim 4, wherein it further comprises adding, to the hard constraint set ($H$):

- the clause ($b_{\text{root}(T)}$) of a root node ($root(T)$) of the decision tree ($T$);
- the clause ($b_r$) of each terminal node ($r$) of the decision tree ($T$) whose class ($\varsigma$ ($r$)) is equal to the prediction ($c$) of the input path; and
- the negation ($\neg b_r$) of the clause of each terminal node ($r$) of the decision tree ($T$) whose class ($\varsigma$ ($r$)) is different from the prediction ($c$) of the input path.

6. Method according to claim 4, **characterized in that** the inheritance processing further comprises, determining that the feature ($i$) of the current node ($r$) is not included in a path feature set ($\Phi(P)$) of features involved in the input path ($P$), and then adding to the hard constraint set ($H$) the universal clause ($u_i$) associated to said feature ($i$).

7. Method according to claim 1, **characterized in that** the first sub-inheritance processing and the second sub-inheritance processing both comprises performing the inheritance processing on the child node ($s$).

8. Method according to claim 7, **characterized in that** the inheritance processing further comprises determining that the current node ($r$) is a terminal node, then returning the result of determining that the prediction of said current node ($r$) is different from that of the input path ($P$).

9. Method according to claim 1, wherein it comprises:

- performing the inheritance processing at least for a root node (root($T$)) of the decision tree ($T$) for at least one current universal set ($U$), thereby returning processed tree data; and
- determining the broadest universal set ($UR$) such that said processed tree data satisfy a third criterion relative to the non-existence of an alternative path ($Q$) leading to a different prediction than that of the input path ($P$).

10. Method according to claim 9, **characterized in that** for a given current universal set ($U$), the inheritance processing is performed not more than once for each node ($r$) of the decision tree ($T$).

11. Method according to claim 9, **characterized in that** the processed tree data comprises, for each universal set ($U$) for which the inheritance processing is performed, an alternative existence value equal to what the inheritance processing returns,

the alternative existence value representing if there exists an alternative path ($Q$) consistent with said input path ($P$) and leading to a different prediction ($d$) than that ($c$) of the input path ($P$), while considering each feature of the current universal set ($U$) as universal;
and **in that** the third criterion is that the alternate existence value is true.

12. Method according to claim 11, **characterized in that** determining the broadest universal set ($UR$) comprises

- initializing the current universal set ($U$) as the complementary, in the feature set ($F$), of a path feature set $\Phi(P)$ of features involved in the input path ($P$);
- for at least one current feature ($i$) of the path feature set $\Phi(P)$:

  * adding the current feature ($i$) to the current universal set ($U$),
  * determining that the inheritance processing returns true, the inheritance processing being performed as a function of the root node (root($T$)) and of the current universal set ($U$), and then removing the current feature ($i$) from the current universal set ($U$); and

- returning the current universal set ($U$) as the broadest universal set ($UR$).

13. Method according to either claim 9, **characterized by** comprising

- performing the inheritance processing for every node ($r$) of the decision tree ($T$) while considering the feature set (*F*) as the current universal set (*U*), thereby returning the hard constraint set (*H*) as the processed tree data; and
- the third criterion being that the hard constraint set (*H*) is entirely satisfied while considering any universal set (*U*) as a soft constraint set (*B*) in a MaxSAT solver.

14. Electronic device for processing decision data, the decision data comprising a decision tree (*T*) and an input path (*P*) in the decision tree (*T*), each node (*r*) of the decision tree being associated with a respective feature (*i*) of a feature set (*F*),

the device being **characterized in that** it comprises means for processing at least one iteration of an inheritance processing, as a function of a current universal set (*U*), representing some features which could be irrelevant to explain the input path, the current universal set (*U*) being included in the feature set (*F*) and as a function of a current node (*r*) and a child node (*s*) linked together by an edge ((*r, s*)), the inheritance processing comprising:

- determining that said edge ((*r, s*)) verifies a first criterion relative to a consistency of said edge ((*r, s*)) with a corresponding edge ((*r', s'*)) of the input path (*P*) relative to the same feature (*i*) as those of the current node (*r*), and then performing a first sub-inheritance processing as a function of said child node (*s*); and/or
- determining that said edge ((*r, s*)) verifies a second criterion, and then performing a second sub-inheritance processing as a function of said child node (*s*) and the current universal set (*U*),

such that the first sub-inheritance processing and the second sub-inheritance processing allows including features in said current universal set (*U*) for explaining the input path (*P*).

15. A non-transitory computer-readable medium comprising a computer program product recorded thereon and capable of being run by a processor, including program code instructions for implementing a method according to any one of claims 1 to 13.

Figure 1

Figure 2

Figure 3

Figure 4

S08

r, U, P

H

S20 — Y

N

S22    $H \mathrel{+}= (b_r \rightarrow b_s)$

S24 — Y

N

S26    $H \mathrel{+}= (b_r \wedge u_i \rightarrow b_s)$

S28

H

Figure 5

Figure 6

S08

$r, U, P$

$r \in T(\mathcal{T})$ ? — Y → RETURN $(\varsigma(r) \neq c\,?)$

N

S20 — Y

N

S24 — Y

N

S28     S22

S30

Figure 7

$$\mathcal{T}, F, P$$

S201    $U = F \backslash \Phi(\mathrm{P})$

S202    $\forall i \in \Phi(P)$

S202a    $U \leftarrow U \cup \{i\}$

S202b
$\mathrm{EQP}(P, U, \mathrm{root}(\mathcal{T}))$ ?

N

Y

S202c    $U \leftarrow U \backslash \{i\}$

S203        return $U$

Figure 8

**DD**

801

Processor

802

Storage Unit

805

Interface
Unit

To external
Apparatus

806

803

Input Device

804

Output
Device

Europäisches
Patentamt
European
Patent Office
Office européen
des brevets

**EUROPEAN SEARCH REPORT**

Application Number

**EP 22 17 3729**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IGNATIEV ALEXEY ET AL: "Using MaxSAT for Efficient Explanations of Tree Ensembles", PROCEEDINGS OF THE AAAI CONFERENCE ON ARTIFICIAL INTELLIGENCE, [Online] vol. 36, 22 February 2022 (2022-02-22), pages 3776-3785, XP055975991, ISSN: 2159-5399, DOI: 10.1609/aaai.v36i4.20292 Retrieved from the Internet: URL:https://ojs.aaai.org/index.php/AAAI/article/view/20292/20051> [retrieved on 2022-10-28] * abstract * * Chapters 1-5; page 3776 – page 3784; figures 1, 2; table 1 * | 1-15 | INV. G06N5/00 G06N5/04 |

-----

| | |
|---|---|
| | TECHNICAL FIELDS SEARCHED (IPC) |
| | G06N |

The present search report has been drawn up for all claims

| Place of search | Date of completion of the search | Examiner |
|---|---|---|
| The Hague | 28 October 2022 | Hasnas, Sergiu |